# EUROPÄISCHE PATENTSCHRIFT

(11) **EP 2 340 373 B1**
(45) Veröffentlichungstag und Bekanntmachung des Hinweises auf die Patenterteilung: **28.11.2012**
(21) Anmeldenummer: 09740687.0
(22) Anmeldetag: 23.10.2009
(51) Int. Cl.: F16B 35/04

(54) **SCHRAUBE UND DAMIT HERGESTELLTE VERBINDUNG**
SCREW AND CONNECTION PRODUCED THEREWITH
VIS ET ASSEMBLAGE RÉALISÉ AVEC CELLE-CI

(30) Priorität: 28.10.2008 DE 202008014305 U
(43) Veröffentlichungstag der Anmeldung: 06.07.2011
(73) Patentinhaber: SFS intec Holding AG, 9435 Heerbrugg (CH)
(72) Erfinder: GASSER, Daniel, CH-9444 Diepoldsau (CH)
(86) Internationale Anmeldenummer: PCT/EP2009/063951
(87) Internationale Veröffentlichungsnummer: WO 2010/049355

(56) Entgegenhaltungen:
- EP-A1- 0 209 778
- EP-A2- 1 936 066
- DE-A1- 10 249 993
- DE-A1-102005 001 986

## Beschreibung

Die Erfindung betrifft eine Schraube mit einem ersten Schaftabschnitt aus Kunststoff, der mit einem an- oder eingeformten Antriebsabschnitt versehen und formschlüssig und drehfest mit einem zweiten Schaftabschnitt aus Metall verbunden ist, welcher in zu dem Antriebsabschnitt entgegengesetzter Richtung einen gewindefreien Abschnitt und daran anschließend ein Gewinde aufweist, wobei der gewindefreie Abschnitt sich teilweise in dem ersten Schaftabschnitt und teilweise außerhalb desselben erstreckt und wobei der zweite Schaftabschnitt innerhalb des ersten Schaftabschnittes einen axialen Abstand von dem Antriebsabschnitt aufweist, wobei der zweite Schaftabschnitt einen sich von dem gewindefreien Abschnitt aus in dem ersten Schaftabschnitt in Richtung zu dem Antriebsabschnitt erstreckenden Teil mit einem weiteren Gewinde aufweist, das die formschlüssige und drehfeste Verbindung mit dem ersten Schaftabschnitt bildet.

Außerdem betrifft die Erfindung eine Verbindung zum Festlegen von Flächenelementen wie Glasscheiben an einer Pfosten und Riegel od.dgl. aufweisenden Dach- oder Fassadenkonstruktion, wobei Pfosten und Riegel jeweils aus Metall bestehen und ein Grundprofil aufweisen und wobei mindestens eine Schraube, die mit dem Grundprofil in Gewindeeingriff ist, mittels einer äußeren Halteleiste über Auflagedichtungen zwei Flächenelemente an dem Grundprofil festlegt.

Eine Schraube der vorgenannten Art ist aus dem Dokument EP O 209 778 A1 bekannt. Eine Verbindung der vorgenannten Art ist beispielshalber aus dem Dokument DE 10 2005 001 986 A1 bekannt.

Das vorgenannte Dokument EP 0 209 778 A1 befaßt sich mit einer Befestigungsvorrichtung für mit einer Metallverkleidung versehene Fenster- oder Türrahmen. Dabei ist die Befestigungsschraube vom Inneren des Rahmens durch eine Bohrung im Rahmen in die Verkleidung geführt und weist an ihrem einen Ende ein Metallgewinde auf. Das andere Ende ist durch einen Kunststoffkopf gebildet. An der Unterseite des Schraubenkopfes ist zwischen dem Schraubenkopf und einer Stützfläche in der Rahmenbohrung eine Unterlegscheibe aus Kunststoff angeordnet. Da zwischen der Metallverkleidung und einem aus Holz oder Kunststoff bestehenden Fenster- oder Türrahmen zwangsläufig Temperaturunterschiede auftreten, ergeben sich zwischen der Verkleidung und dem Rahmen Spannungen, die von der Schraube aufgenommen werden müssen. Bei der bekannten Befestigungsschraube besteht die Unterlegscheibe aus elastisch verformbarem Kunststoff, so dass sie die Spannungen aufnehmen kann. Darüber hinaus ist der aus Kunststoff gefertigte Schraubenkopf zum freien Ende hin mit einer Mantelfläche versehen, die der einer sich zum freien Ende verjüngenden Kugelschicht entspricht.

Bei einem Befestigungselement oder einer Schraube, die aus dem Dokument DE 102 49 993 B4 bekannt ist, geht es nicht um eine Wärmedämmung zwischen dem Kopf einer Schraube und einem Pfosten oder Riegel, sondern im Vordergrund steht das Herstellen einer Verbindung zwischen Platten und einem Unterbau, zwischen denen noch Dämmstoffe angeordnet sind, wobei der Krafteintrag über den Schraubenkopf auf die angrenzende Platte breitflächig und gleichmäßig übergeleitet werden soll. In diesem Fall sind noch Haltescheiben notwendig, die zwischen dem Schraubenkopf und einer zu befestigenden Platte eingelegt werden. Das Anbringen der Haltescheiben auf den Schrauben erfordert einen zusätzlichen Arbeitsgang, wenn die Schrauben in Bereichen eingesetzt werden, die Temperaturschwankungen ausgesetzt sind, sollen keine Kältebrücken entstehen. Zu diesem Zweck geht der erste Schaftabschnitt verjüngend, vorzugsweise konisch, unter Bildung einer Kegelfläche, in den zweiten Schaftabschnitt über. So sollen keine Stufen entstehen, die einen Schraubvorgang bzw. einen Eintreibvorgang in verschiedenste Materialstrukturen behindern können. Das bekannte Befestigungselement soll sich einfachst herstellen lassen, indem man beispielsweise an eine handelsübliche Schraube einen ersten Schaftabschnitt mit einem Antriebsabschnitt aus einem geeigneten Kunststoff anspritzt. Eine dafür geeignete handelsübliche Schraube hat einen gewindefreien Schaftabschnitt, der wenigstens die Hälfte von deren Länge einnimmt und sich von dem einen Gewinde bis zu dem Schraubenkopf erstreckt. Das Anspritzen des ersten Schaftabschnittes an den zweiten Schaftabschnitt lässt sich damit sicher problemlos durchführen, zur formschlüssigen und drehfesten Verbindung der beiden Schaftabschnitte miteinander ist aber lediglich der Schraubenkopf vorhanden. Wenn es sich um eine Flachkopfsenkschraube oder um eine Schraube mit Halbrundkopf handelt, wird die drehfeste Verbindung lediglich mit dem Kunststoff erzielt, der in den Schlitz einfasst, welcher in dem Schraubenkopf für den Angriff eines Schraubers vorhanden ist. Große Drehmomente werden sich damit nicht übertragen lassen. Mit einem Sechskantkopf mit Außenkraftangriff lassen sich sicher höhere Drehmomente übertragen, diese sind jedoch ebenfalls begrenzt, weil diese Übertragung nur im Bereich des äußeren Umfangs des Schraubenkopfes stattfinden wird. Üblicherweise wird deshalb nach dem Dokument DE 102 49 993 B4 nicht eine handelsübliche Schraube eingesetzt, sondern eine Spezialschraube, die statt eines Schraubenkopfes ein aufgespreiztes Ende hat, welches gewährleisten soll, dass die Verbindung zwischen dem ersten und dem zweiten Schaftabschnitt auch bei erhöhten Kraftbelastungen nicht beschädigt wird. Eine solche drehfeste Verbindung zwischen einem aufgespreizten Ende einer Schraube und einem angespritzten Kopf aus Kunststoff ist beispielsweise aus dem Dokument EP 0 108 533 A1 bekannt. Bei dieser Schraube steht aber nicht das Vermeiden einer Kältebrücke über die Schraube im Vordergrund, sondern das Erzielen einer guten wetterdichten Abdichtung, wenn die Schraube zum Befestigen von Aluminium- oder Stahlblech an einem starren Dachträger eingesetzt wird. Zu diesem Zweck hat diese bekannte Schraube einen aus Kunststoff gefertigten Kopf mit besonders großem Durchmesser zum Anpressen einer elastomeren Dichtscheibe an das Aluminium- oder Stahlblech.

Bei der Verbindung nach dem Dokument DE 10 2005 001 986 A1 sind an einem Pfosten oder Riegel die Profile innen und außen zwar thermisch voneinander getrennt, nach wie vor jedoch besteht eine thermische Brücke über die metallische Schraube. Damit deren Kopf nicht freiliegt, wird zusätzlich eine Abdeckschale zum Abdecken der Schraubenköpfe eingesetzt. Obwohl ein Isolatorprofil eingesetzt wird, um eine thermische Trennung zu erreichen, kommt die Schraube mit dem unter dem Isolatorprofil angeordneten Grundprofil in Gewindeeingriff und stellt eine durchgehende metallische Verbindung zwischen dem Kopf der Schraube und dem Grundprofil her, so dass die durch das Isolatorprofil erzielte Wärmedämmung teilweise wieder aufgehoben wird.

Aus dem Dokument DE 23 12 942 A1 und aus dem Dokument EP 0 176 968 A1 sind Befestiger bekannt, bei denen eine metallische Schraube oder Gewindestange gänzlich bzw. auf einem Teil ihrer Länge mit Kunststoff umhüllt ist. In beiden Fällen erstreckt sich die Schraube oder Gewindestange bis in den Antriebsabschnitt des Befestigers. Das hat zur Folge, dass durch die metallische Schraube oder Gewindestange Wärme, die diese im Bereich ihrer Länge aufnimmt, über die gesamte Länge des Befestigers weitergeleitet wird, so dass auch in diesem Fall eine thermische Brücke über die metallische Schraube oder Gewindestange besteht.

Aufgabe der Erfindung ist es, eine Schraube zu schaffen sowie eine damit hergestellte Verbindung an einer Dach- oder Fassadenkonstruktion, mit der sich die Wärmedämmung bei einer Dach- oder Fassadenkonstruktion auf einfache und kostengünstige Weise verbessern lässt.

Diese Aufgabe ist ausgehend von einer Schraube der eingangs genannten Art dadurch gelöst, dass der erste Schaftabschnitt eine zwischen dem Antriebsabschnitt und dem zweiten Schaftabschnitt ausgebildete radiale Durchgangsöffnung aufweist oder einen zwischen dem Antriebsabschnitt und dem zweiten Schaftabschnitt ausgebildeten Hohlraum enthält.

Ausgehend von einer Verbindung der eingangs genannten Art ist die Aufgabe erfindungsgemäß dadurch gelöst, dass sich mit einer erfindungsgemäßen Schraube zwischen dem Kopf der Schraube und dem Grundprofil eine durchgehende metallische Verbindung bei vermindertem Wärmedurchgang durch die Schraube vermeiden lässt.

Dadurch, dass bei der Schraube nach der Erfindung der erste Schaftabschnitt eine zwischen dem Antriebsabschnitt und dem zweiten Schaftabschnitt ausgebildete radiale Durchgangsöffnung aufweist oder einen zwischen dem Antriebsabschnitt und dem zweiten Schaftabschnitt ausgebildeten Hohlraum enthält, hat der erste Schaftabschnitt im Bereich der Durchgangsöffnung oder des Hohlraumes einen kleineren effektiven Querschnitt, wodurch der Wärmedurchgang geringer ist. Die Größe der Durchgangsöffnung ist dabei so bemessen, dass trotzdem ein ausreichend hohes Drehmoment übertragen werden kann. Wenn statt der Durchgangsöffnung der Hohlraum vorhanden ist, ist ebenfalls der Wärmedurchgang geringer, das übertragbare Drehmoment aber weniger reduziert als bei dem Vorhandensein einer radialen Durchgangsöffnung.

Aufgrund der thermischen Trennung, die zwischen der Schraube nach der Erfindung und dem Grundprofil, mit dem diese in Eingriff ist, besteht, ist weder der Einsatz von Abdeckschalen noch die Verwendung von Isolatorprofilen notwendig, so dass sich die Verbindung insgesamt einfacher und kostengünstiger herstellen lässt. Die Wärmedämmung wird insgesamt verbessert, weil der Wärmedurchgang durch die Schraube nach der Erfindung aufgrund ihres Aufbaus vermindert ist.

Vorteilhafte Ausgestaltungen der Erfindung bilden die Gegenstände der Unteransprüche.

Wenn in einer Ausgestaltung der Schraube nach der Erfindung der erste Schaftabschnitt wenigstens in einem Bereich, in dem er den ersten Schaftabschnitt umschließt, als ein Zylinder ausgebildet ist, der sich bis über den gewindefreien Abschnitt erstreckt, lässt sich der Bereich, in welchem das Kunststoffmaterial des ersten Schaftabschnittes mit dem metallischen Material des zweiten Schaftabschnittes in formschlüssigem und drehfestem Eingriff ist, maximieren. Außerdem findet eine gleich gute Drehmomentübertragung in dem gesamten Bereich statt, in welchem der erste Schaftabschnitt den ersten Schaftabschnitt als ein Zylinder umschließt.

Wenn in einer weiteren Ausgestaltung der Schraube nach der Erfindung der Zylinder auf der von dem Antriebsabschnitt abgewandten Seite durch wenigstens einen zylindrischen Abschnitt kleineren Durchmessers abgestuft ausgebildet ist, lässt sich die Schraube bequemer in eine Bohrung einführen, ohne dass die Drehmomentübertragbarkeit nennenswert verringert wird.

Wenn in einer weiteren Ausgestaltung der Schraube nach der Erfindung der zweite Schaftabschnitt aus einer handelsüblichen Gewindestange hergestellt ist, lässt sich die Herstellung der Schraube wesentlich vereinfachen, weil lediglich die Gewindestange mit dem gewindefreien Schaftabschnitt versehen zu werden braucht. Je nach Einsatzzweck kann die Gewindestange an ihrem zu dem ersten Schaftabschnitt entgegengesetzten Ende mit einer Spitze oder Bohrspitze mit einem entsprechenden Gewinde oder selbstschneidenden Gewinde versehen werden. Statt dieses Gewindes kann auch ein Holz- oder Blechschraubengewinde verwendet werden.

Wenn in einer weiteren Ausgestaltung der Schraube nach der Erfindung die Gewindestange innerhalb des ersten Schaftabschnittes an dem Teil mit dem weiteren Gewinde zusätzlich einen flachen Kopf und/oder eine rillenartige Umfangsausnehmung aufweist, lässt sich die Kraftübertragung in axialer Richtung wesentlich verbessern.

Die Schraube nach der Erfindung kann als eine Maschinenschraube oder als eine Bohrschraube ausgestaltet sein.

Wenn in einer weiteren Ausgestaltung der Schraube nach der Erfindung der gewindefreie Abschnitt zwischen dem Gewinde und dem ersten Schaftabschnitt mit wenigstens zwei Bohrflügeln versehen ist, deren Außendurchmesser dem Außendurchmesser des ersten Schaftabschnittes entspricht, lässt sich ein Material, in welchem die erfindungsgemäße Schraube gesetzt wird, auf den Außendurchmesser des ersten Schaftabschnittes aufbohren. Diese Ausgestaltung ist zweckmäßig einsetzbar, wenn das Material, in welchem die erfindungsgemäße Schraube gesetzt wird, härter als der Kunststoff des ersten Schaftabschnittes ist, also ein Material wie z.B. Holz oder Metall.

Wenn in einer weiteren Ausgestaltung der Schraube nach der Erfindung der erste Schaftabschnitt an seinem von dem Antriebsabschnitt abgewandten Ende am Umfang mit wenigstens einer Bohrschneide versehen ist, lässt sich ein Material, in welchem die erfindungsgemäße Schraube gesetzt wird, auf den Außendurchmesser des ersten Schaftabschnittes aufbohren. Diese Ausgestaltung ist zweckmäßig einsetzbar, wenn das Material, in welchem die erfindungsgemäße Schraube gesetzt wird, weicher als der Kunststoff des ersten Schaftabschnittes ist, also ein Material wie z.B. ein Dämmstoff aus geschäumtem Polyurethan.

Wenn in einer weiteren Ausgestaltung der Schraube nach der Erfindung das weitere Gewinde des zweiten Schaftabschnittes eine kleinere oder größere Gewindesteigung aufweist als das andere Gewinde des zweiten Schaftabschnittes, sind pro Längeneinheit mehr bzw. weniger Gewindegänge mit dem Kunststoff des ersten Schaftabschnittes in Eingriff, so dass ein höherer Zug-Bruch-Wert erreicht werden kann bzw. ein höheres Drehmoment übertragbar ist.

Wenn in einer weiteren Ausgestaltung der Schraube nach der Erfindung der Hohlraum mit einem Dämmmaterial gefüllt ist, ist der Wärmedurchgang noch weiter reduziert.

Wenn in einer weiteren Ausgestaltung nach der Erfindung der erste Schaftabschnitt aus verstärktem Kunststoff besteht, kann beim Eindrehen der Schraube ein größeres Drehmoment übertragen werden. Ausführungsbeispiele der Erfindung werden im Folgenden unter Bezugnahme auf die Zeichnungen näher beschrieben. Es zeigt
- Fig. 1: ein erstes Erläuterungsbeispiel einer Schraube in einer Teillängsschnittansicht,
- Fig. 2: als eine Einzelheit einen zweiten Schaftabschnitt der Schraube nach Fig. 1 in Seitenansicht,
- Fig. 3: eine Einzelheit eines zweiten Erläuterungsbeispiels einer Schraube ,
- Fig. 4: eine mit der Schraube nach Fig. 1 hergestellte Verbindung,
- Fig. 5: eine drittes Erläuterungsbeispiel einer Schraube, die gesetzt in einem Material gezeigt ist,
- Fig. 6: ein viertes Erläuterungsbeispiel einer Schraube in Seitenansicht,
- Fig. 7: ein fünftes Erläuterungsbeispiel einer Schraube in einer Teillängsschnittansicht,
- Fig. 8: ein erstes Ausführungsbeispiel einer Schraube nach der Erfindung in einer Teillängsschnittansicht und
- Fig. 9: ein zweites Ausführungsbeispiel der Schraube nach der Erfindung in einer Teillängsschnittansicht.

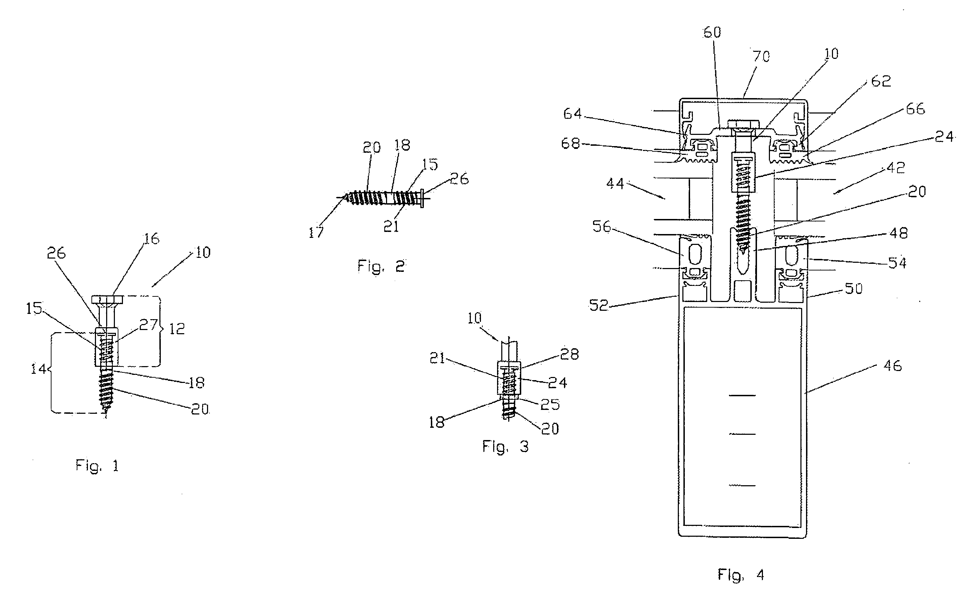

In einem in Fig. 1 in einer Teillängsschnittansicht gezeigten ersten Erläuterungsbeispiel einer insgesamt mit 10 bezeichneten Schraube hat diese einen ersten Schaftabschnitt 12 und einen zweiten Schaftabschnitt 14. Der erste Schaftabschnitt 12 besteht aus Kunststoff, insbesondere aus einem verstärkten Kunststoff wie beispielsweise einem glas- oder kohlefaserverstärkten Kunststoff, resp. einem anderen Composite-Werkstoff. Der erste Schaftabschnitt 12 ist in dem Erläuterungsbeispiel nach Fig. 1 mit einem angeformten Antriebsabschnitt 16 versehen, der in dem dargestellten Erläuterungsbeispiel an den ersten Schaftabschnitt 12 angeformt ist, zum Beispiel als ein Sechskantkopf zum Antrieb mit einem Gabelschlüssel. Stattdessen könnte der Antriebsabschnitt 16 auch als ein Sechskantloch ausgebildet sein, das in den ersten Schaftabschnitt 12 eingeformt ist, z. B. zum Antrieb mit einem Torx- oder Inbusschlüssel. Der zweite Schaftabschnitt 14 besteht aus Metall, beispielsweise aus Stahl. Der erste Schaftabschnitt 12 und der zweite Schaftabschnitt 14 sind in einem Bereich 27, in dem sie sich überlappen, formschlüssig und drehfest miteinander verbunden, was weiter unten noch näher beschrieben ist. Der zweite Schaftabschnitt 14 weist in zu dem Antriebsabschnitt 16 entgegengesetzter Richtung einen gewindefreien Abschnitt 18 und daran anschließend ein Gewinde 20 auf. Der gewindefreie Abschnitt 18 erstreckt sich teilweise, in dem dargestellten Erläuterungsbeispiel etwa zur Hälfte, in dem ersten Schaftabschnitt 12. Der zweite Schaftabschnitt 14 hat einen sich von dem gewindefreien Schaftabschnitt 18 aus in den ersten Schaftabschnitt 12 erstreckenden Teil 15 mit einem weiteren Gewinde 21, mit dem der zweite Schaftabschnitt 14 in dem ersten Schaftabschnitt 12 formschlüssig und drehfest verankert ist.

Zum Herstellen dieser formschlüssigen und drehfesten Verankerung ist der erste Schaftabschnitt 12 in einem Bereich 27, in dem er unterhalb des Antriebsabschnittes 16 den zweiten Schaftabschnitt umschließt, als ein verdickter Zylinder 24 ausgebildet, der sich bis über den gewindefreien Abschnitt 18 erstreckt. Zusätzlich hat der zweite Schaftabschnitt 14 an seinem dem Antriebsabschnitt 16 zugewandten Ende einen flachen Kopf 26, der im Querschnitt mehreckig oder kreisrund sein kann. Zum Herstellen der Schraube 10 wird der zweite Gewindeabschnitt 14 in eine Spritzgießform (nicht dargestellt) eingesetzt, in welcher der erste Schaftabschnitt 12 an den zweiten Schaftabschnitt 14 angespritzt wird. Dabei wird der zweite Schaftabschnitt 14 mit seinem Gewinde 21 in den Zylinder 24 des ersten Schaftabschnittes 12 drehfest und formschlüssig eingebettet. Der flache Kopf 26, der auch als Amboss bezeichnet wird, überträgt eine Axialkraft von dem zweiten Schaftabschnitt 14 auf den ersten Schaftabschnitt 12, und umgekehrt.

Bei der in den Fig. 1 und 2 dargestellten Schraube 10 kann der zweite Schaftabschnitt 14 aus einer handelsüblichen Gewindestange hergestellt werden. Die Gewindestange weist innerhalb des ersten Schaftabschnittes 12, also innerhalb von dessen Zylinder 24 an dem Teil 15 mit dem weiteren Gewinde 21 zusätzlich den flachen Kopf 26 auf, der an der Gewindestange nachträglich angeformt worden ist. Zusätzlich zu dem flachen Kopf oder statt demselben (Fig. 3) weist der Teil 15 eine rillenartige Umfangsausnehmung 28 auf (Fig. 2), die die Übertragung von Axialkraft bewirkt oder unterstützt. Üblicherweise ist das Gewinde 21 der Gewindestange aber für eine formschlüssige und drehfeste Verbindung der beiden Schaftabschnitte ausreichend. Weiter ist in dem in den Fig. 1 und 2 dargestellten Erläuterungsbeispiel die Gewindestange an einem Ende mit einer Bohrspitze versehen, wobei das Gewinde 20 ein selbstschneidendes Gewinde ist. Statt dessen könnte der Teil des zweiten Schaftabschnittes 14, der mit dem Gewinde 20 versehen ist, auch wie der Gewindeschaft einer Holz- oder Blechschraube oder einer handelsüblichen Maschinenschraube (nicht dargestellt) ausgebildet sein. In diesem Fall hätte die Schraube 10 statt der Spitze 17 ein stumpfes Ende. Der Zylinder 24 endigt etwa auf der Mitte des gewindefreien Abschnittes 18.

Ein geeigneter Werkstoff für den ersten Schaftabschnitt 12 ist ein hochfester Kunststoff mit einer Festigkeit von mehr als 250 N/mm*²* (bei 20°C).

In einem zweiten Erläuterungsbeispiel einer Schraube, von dem eine Einzelheit in Fig. 3 gezeigt ist, ist der Zylinder 24 auf der von dem Antriebsabschnitt 16 abgewandten Seite durch einen zylindrischen Abschnitt 25 kleineren Durchmessers abgestuft ausgebildet.

Fig. 4 zeigt eine mit einer Schraube 10 nach Fig. 1 hergestellte Verbindung zum Festlegen von Isolierglasscheiben 42, 44 an einer Pfosten und Riegel od.dgl. aufweisenden Dach- oder Fassadenkonstruktion, im vorliegenden Fall einer vorgehängten Glasfassade für ein Gebäude. Die Pfosten und Riegel werden rechtwinkelig aneinander befestigt. Jeder Pfosten und Riegel weist ein Grundprofil 46 auf und einen an dem Grundprofil angeformten Schraubsteg 48. Benachbart zu dem Schraubsteg 48 sind an dem Grundprofil 46 zwei im Querschnitt U-förmige Halteprofile 50 und 52 angeformt, welche als Gummiprofile ausgebildete Auflagedichtungen 54 bzw. 56 für die Isolierglasscheiben 42 bzw. 44 haltern. Die Isolierglasscheiben 42 und 44 sind an dem Grundprofil 46 mittels einer Halteleiste 60 und mittels Schrauben 10 festgelegt. An der Halteleiste 60 sind zwei U-Profile 62, 64 zur Halterung von zwei als Gummiprofile ausgebildeten Auflagedichtungen 66 bzw. 68 ausgebildet. Die Halteleiste 60 kann beispielshalber, ebenso wie das Grundprofil 46, aus Aluminium bestehen. Über der Halteleiste 60 ist eine Abdeckplatte 70 angeordnet. Die Schraube 10 hat als Antriebsabschnitt 16 einen Schraubenkopf und als Gewinde 20 des zweiten Schaftabschnittes 14 ein selbstschneidendes Gewinde. Die Spitze 17 ist als Bohrspitze ausgebildet. Der Schraubsteg 48 des Grundprofils 46 ist als ein Hohlsteg ausgebildet. Er hat zwei parallele Wände, deren Abstand kleiner ist als der Außendurchmesser des Gewindes 20, das mit dem Schraubsteg 48 in Gewindeeingriff steht. Die Schraube 10 kann auch eine Bohrschraube sein.

Der Schraubsteg 48 könnte statt dessen aber auch eine durchgehende Leiste sein, die Gewindebohrungen aufweist, in welche jeweils eine der Schrauben 10, die als Maschinenschrauben ausgebildet sind, eingedreht wird. Wenn es sich bei der Schraube 10 um eine Schraube mit Bohrspitze handelt, kann diese ihre zugeordnete Gewindebohrung in dem als Leiste ausgebildeten Schraubsteg 48 selber herstellen. Die Schraube 10 verhindert bei der in Fig. 4 gezeigten Verbindung, dass zwischen der Halteleiste 60 und dem Schraubsteg 48 eine Kältebrücke gebildet wird.

Der bei der Schraube 10 eingesetzte Kunststoff ist zwar vorzugsweise ein thermisch isolierendes Material, könnte jedoch statt dessen oder zusätzlich ein elektrisch und/oder chemisch isolierendes Material sein.

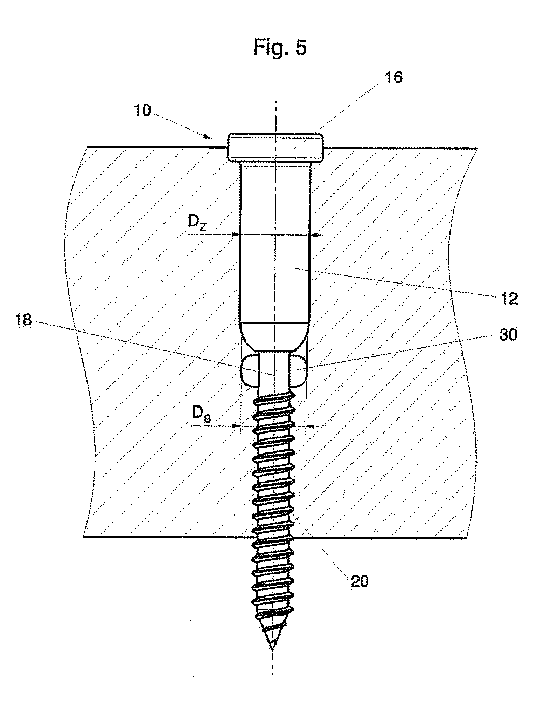

In Fig. 5 ist ein drittes Erläuterungsbeispiel einer Schraube 10 gezeigt, und zwar gesetzt in einem Material 35, bei dem es sich um eine Sandwichplatte handeln kann, die durch die Schraube 10 auf einer nicht dargestellten Unterlage befestigt ist. Der gewindefreie Schaftabschnitt 18 ist zwischen dem Gewinde 20 und dem ersten Schaftabschnitt 12 mit zwei diametral entgegengesetzt angeordneten Bohrflügeln 30 versehen, deren Außendurchmesser D_{B} dem Außendurchmesser D_{Z} des ersten Schaftabschnittes 12 entspricht. Die Bohrflügel 30 erlauben, das Material 35, in welchem die Schraube 10 gesetzt wird und das härter als der Kunststoff des ersten Schaftabschnittes 12 ist, auf den Durchmesser D_{Z} des ersten Schaftabschnittes 12 aufzubohren.

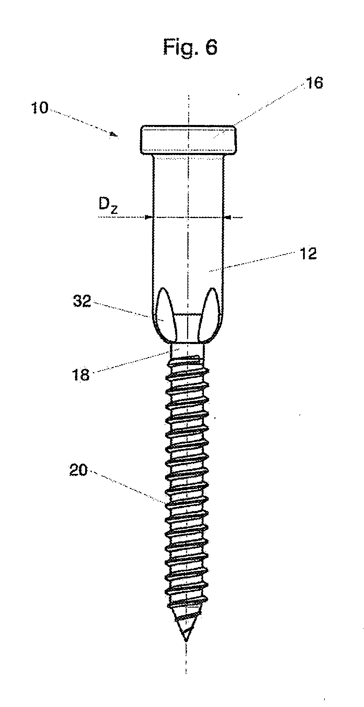

Bei einem in Fig. 6 in Seitenansicht gezeigten vierten Erläuterungsbeispiel einer Schraube 10 ist der erste Schaftabschnitt 12 an seinem von dem Antriebsabschnitt 16 abgewandten Ende am Umfang mit mehreren Bohrschneiden 32 versehen. Die Bohrgeometrie des aus Kunststoff bestehenden ersten Schaftabschnittes 12 erlaubt, ein Material wie das in Fig. 5 gezeigte, in welchem die Schraube 10 zu setzen ist und das weicher als der Kunststoff des ersten Schaftabschnittes 12 ist, auf den Durchmesser D_{Z} des ersten Schaftabschnittes 12 aufzubohren.

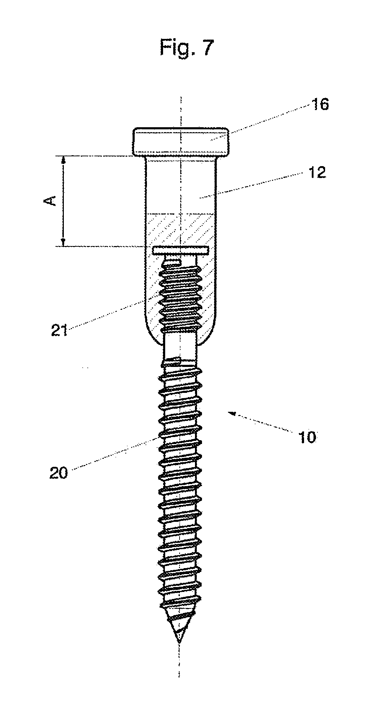

Bei einem in Fig. 7 in einer Teillängsschnittansicht gezeigten fünften Erläuterungsbeispiel einer Schraube 10 weist das weitere Gewinde 21 des zweiten Schaftabschnittes 14 eine kleinere Gewindesteigung auf als das andere Gewinde 20 des zweiten Schaftabschnittes 14. Dadurch gelangen pro Längeneinheit mehr Gewindegänge mit dem Kunststoff des ersten Schaftabschnittes 12 in Eingriff, so dass ein höherer Zug-Bruch-Wert erreicht werden kann.

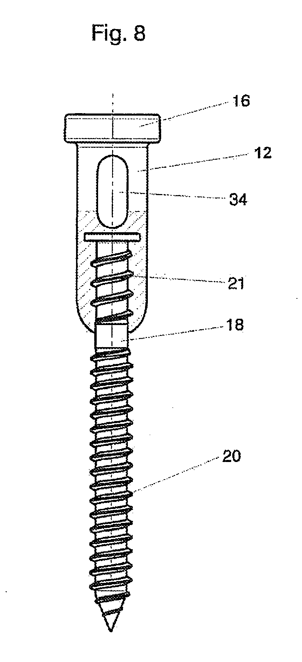

Bei einem in Fig. 8 in einer Teillängsschnittansicht gezeigten ersten Ausführungsbeispiel einer Schraube 10 nach der Erfindung weist das weitere Gewinde 21 des zweiten Schaftabschnittes 14 eine größere Gewindesteigung auf als das andere Gewinde 20 des zweiten Schaftabschnittes 14. Dadurch gelangen pro Längeneinheit weniger Gewindegänge mit dem Kunststoff des ersten Schaftabschnittes 12 in Eingriff, so dass ein höheres Drehmoment übertragbar ist.

Außerdem weist bei dem in Fig. 8 gezeigten ersten Ausführungsbeispiel einer Schraube 10 nach der Erfindung der erste Schaftabschnitt 12 eine zwischen dem Antriebsabschnitt 16 und dem zweiten Schaftabschnitt 14 ausgebildete radiale Durchgangsöffnung 34 auf. Die Durchgangsöffnung 34 verkleinert den wirksamen Querschnitt des ersten Schaftabschnittes 12 und verringert dadurch den Wärmedurchgang in dem ersten Schaftabschnitt 12. Die Größe der Durchgangsöffnung 34 wird so gewählt, dass das übertragbare Drehmoment relativ groß bleibt. Wie bei dem ersten Ausführungsbeispiel nach Fig. 8 weist das weitere Gewinde 21 des zweiten Schaftabschnittes 14 eine größere Gewindesteigung auf als das andere Gewinde 20 des zweiten Schaftabschnittes 14.

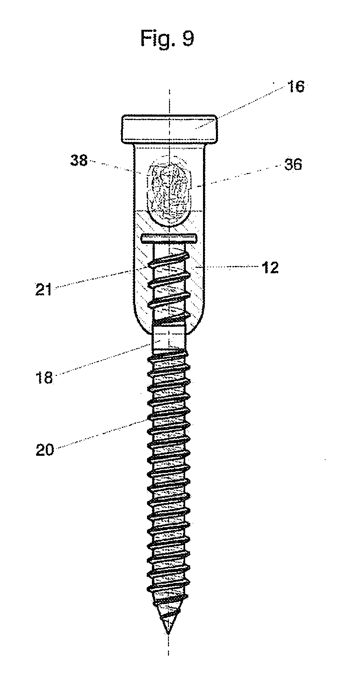

In einem in Fig. 9 in einer Teillängsschnittansicht gezeigten zweiten Ausführungsbeispiel der Schraube 10 nach der Erfindung enthält der erste Schaftabschnitt 12 einen zwischen dem Antriebsabschnitt 16 und dem zweiten Schaftabschnitt 14 ausgebildeten Hohlraum 36. Der Hohlraum 36 verringert wie die Durchgangsöffnung 34 den effektiven Querschnitt und damit den Wärmedurchgang. In dem dargestellten Ausführungsbeispiel ist der Hohlraum 36 zur weiteren Verringerung des Wärmedurchgangs mit einem Dämmmaterial 38 gefüllt. Das übertragbare Drehmoment wird durch den zylindrischen Hohlraum 36 nur geringfügig reduziert.

Wenn die Schraube 10 nach den beiden vorstehend beschriebenen Ausführungsbeispielen der Erfindung so wie bei dem in Fig. 4 gezeigten Erläuterungsbeispiel eingesetzt wird, in welchem sie kein Material oder kein Bauteil aufzubohren hat, ist der erste Schaftabschnitt an seinem in den Darstellungen unteren Ende jeweils zylindrisch ausgebildet, wie es in den Fig. 1, 3, 4, 5, 7-9 gezeigt ist. Wenn hingegen ein Bauteil oder das Material 35, in welchem die Schraube 10 zu setzen ist, aufzubohren ist, ist der erste Schaftabschnitt 12 unterhalb des vorgenannten unteren Endes zusätzlich mit den Bohrflügeln 30 versehen oder ist selbst mit einer Bohrgeometrie der in Fig. 6 dargestellten Art ausgestattet.

### Bezugszeichenliste

- 10: Schraube
- 12: erster Schaftabschnitt
- 14: zweiter Schaftabschnitt
- 15: Teil
- 16: Antriebsabschnitt
- 17: Spitze
- 18: gewindefreier Abschnitt
- 20: Gewinde
- 21: weiteres Gewinde
- 24: Zylinder
- 25: zylindrischer Abschnitt
- 26: flacher Kopf
- 27: Bereich
- 28: Umfangsausnehmung
- 30: Bohrflügel
- 32: Bohrschneide
- 34: Durchgangsöffnung
- 35: Material
- 36: Hohlraum
- 38: Dämmmaterial
- 42: Isolierglasscheibe
- 44: Isolierglasscheibe
- 46: Grundprofil
- 48: Schraubsteg
- 50: Halteprofil
- 52: Halteprofil
- 54: Auflagedichtung
- 56: Auflagedichtung
- 60: Halteleiste
- 62: U-Profil
- 64: U-Profil
- 66: Auflagedichtung
- 68: Auflagedichtung
- 70: Abdeckplatte
- A: axialer Abstand
- D_{B}: Außendurchmesser Bohrflügel
- D_{Z}: Außendurchmesser erster Schaftabschnitt

## Patentansprüche

1. Schraube mit einem ersten Schaftabschnitt (12) aus Kunststoff, der mit einem an- oder eingeformten Antriebsabschnitt (16) versehen und formschlüssig und drehfest mit einem zweiten Schaftabschnitt (14) aus Metall verbunden ist, welcher in zu dem Antriebsabschnitt (16) entgegengesetzter Richtung einen gewindefreien Abschnitt (18) und daran anschließend ein Gewinde (20) aufweist, wobei der gewindefreie Abschnitt (18) sich teilweise in dem ersten Schaftabschnitt (12) und teilweise außerhalb desselben erstreckt und wobei der zweite Schaftabschnitt (14) innerhalb des ersten Schaftabschnittes (12) einen axialen Abstand (A) von dem Antriebsabschnitt (16) aufweist,
wobei der zweite Schaftabschnitt (14) einen sich von dem gewindefreien Abschnitt (18) aus in dem ersten Schaftabschnitt (12) in Richtung zu dem Antriebsabschnitt (16) erstreckenden Teil (15) mit einem weiteren Gewinde (21) aufweist, das die formschlüssige und drehfeste Verbindung mit dem ersten Schaftabschnitt (12) bildet, **dadurch gekennzeichnet, dass** der erste Schaftabschnitt (12) eine zwischen dem Antriebsabschnitt (16) und dem zweiten Schaftabschnitt (14) ausgebildete radiale Durchgangsöffnung (34) aufweist oder einen zwischen dem Antriebsabschnitt (16) und dem zweiten Schaftabschnitt (14) ausgebildeten Hohlraum (36) enthält.

2. Schraube nach Anspruch 1, **dadurch gekennzeichnet, dass** der erste Schaftabschnitt (12) wenigstens in einem Bereich (27), in dem er den zweiten Schaftabschnitt (14) umschließt, als ein Zylinder (24) ausgebildet ist, der sich bis über den gewindefreien Abschnitt (18) erstreckt.

3. Schraube nach Anspruch 2, **dadurch gekennzeichnet, dass** der Zylinder (24) auf der von dem Antriebsabschnitt (16) abgewandten Seite durch wenigstens einen zylindrischen Abschnitt (25) kleineren Durchmessers abgestuft ausgebildet ist.

4. Schraube nach einem der vorhergehenden Ansprüche, **dadurch gekennzeichnet, dass** der zweite Schaftabschnitt (14) aus einer handelsüblichen Gewindestange hergestellt ist.

5. Schraube nach Anspruch 4, **dadurch gekennzeichnet, dass** die Gewindestange innerhalb des ersten Schaftabschnittes (12) an dem Teil (15) mit dem weiteren Gewinde (21) zusätzlich einen flachen Kopf (26) und/oder eine rillenartige Umfangsausnehmung (28) aufweist.

6. Schraube nach einem der Ansprüche 1 bis 5, **dadurch gekennzeichnet, dass** die Schraube (10) eine Maschinenschraube ist.

7. Schraube nach einem der Ansprüche 1 bis 3, **dadurch gekennzeichnet, dass** die Schraube (10) eine Bohrschraube ist.

8. Schraube nach einem der vorhergehenden Ansprüche, **dadurch gekennzeichnet, dass** der gewindefreie Abschnitt (18) zwischen dem Gewinde (20) und dem ersten Schaftabschnitt (12) mit wenigstens zwei Bohrflügeln (30) versehen ist, deren Außendurchmesser (D_{B}) dem Außendurchmesser (D_{Z}) des ersten Schaftabschnittes (12) entspricht.

9. Schraube nach einem der Ansprüche 1 bis 7, **dadurch gekennzeichnet, dass** der erste Schaftabschnitt (12) an seinem von dem Antriebsabschnitt (16) abgewandten Ende am Umfang mit wenigstens einer Bohrschneide (32) versehen ist.

10. Schraube nach einem der vorhergehenden Ansprüche, **dadurch gekennzeichnet, dass** das weitere Gewinde (21) des zweiten Schaftabschnittes (14) eine kleinere oder größere Gewindesteigung aufweist als das andere Gewinde (20) des zweiten Schaftabschnittes (14).

11. Schraube nach einem der vorhergehenden Ansprüche, **dadurch gekennzeichnet, dass** der Hohlraum (36) mit einem Dämmmaterial (38) gefüllt ist.

12. Schraube nach einem der vorhergehenden Ansprüche, **dadurch gekennzeichnet, dass** der erste Schaftabschnitt (12) aus verstärktem Kunststoff besteht.

13. Verbindung zum Festlegen von Flächenelementen wie Glasscheiben an einer Pfosten und Riegel od. dgl. aufweisenden Dach- oder Fassadenkonstruktion, wobei Pfosten und Riegel jeweils aus Metall bestehen und ein Grundprofil aufweisen und wobei mindestens eine Schraube, die mit dem Grundprofil in Gewindeeingriff ist, mittels einer äußeren Halteleiste über Auflagedichtungen zwei Flächenelemente an dem Grundprofil festlegt, **gekennzeichnet durch** die Verwendung einer Schraube mit einem ersten Schaftabschnitt (12) aus Kunststoff, der mit einem an- oder eingeformten Antriebsabschnitt (16) versehen und formschlüssig und drehfest mit einem zweiten Schaftabschnitt (14) aus Metall verbunden ist, welcher in zu dem Antriebsabschnitt (16) entgegengesetzter Richtung einen gewindefreien Abschnitt (18) und daran anschließend ein Gewinde (20) aufweist, wobei der gewindefreie Abschnitt (18) sich teilweise in dem ersten Schaftabschnitt (12) und teilweise außerhalb desselben erstreckt, wobei der zweite Schaftabschnitt (14) innerhalb des ersten Schaftabschnittes (12) einen axialen Abstand (A) von dem Antriebsabschnitt (16) aufweist, wobei der zweite Schaftabschnitt (14) einen sich von dem gewindefreien Abschnitt (18) aus in dem ersten Schaftabschnitt (12) in Richtung zu dem Antriebsabschnitt (16) erstreckenden Teil (15) mit einem weiteren Gewinde (21) aufweist, das die formschlüssige und drehfeste Verbindung mit dem ersten Schaftabschnitt (12) bildet, und wobei der erste Schaftabschnitt (12) eine zwischen dem Antriebsabschnitt (16) und dem zweiten Schaftabschnitt (14) ausgebildete radiale Durchgangsöffnung (34) aufweist oder einen zwischen dem Antriebsabschnitt (16) und dem zweiten Schaftabschnitt (14) ausgebildeten Hohlraum (36) enthält.

## Claims

1. A screw having a first shank portion (12) of plastics, which is provided with a drive portion (16) moulded thereon or therein and which is interlockingly connected for rotation to a second shank portion (14) of metal, which in the direction away from the drive portion (16) comprises a threadless portion (18) and then a thread (20), the threadless portion (18) extending partially in the first shank portion (12) and partially outside said portion and the second shank portion (14) inside the first shank portion (12) being at an axial distance (A) from the drive portion (16),
the second shank portion (14) comprising a part (15) with a further thread (21), said part (15) extending from the threadless portion (18) in the first shank portion (12) towards the drive portion (16) and forming the interlocking connection for rotation with the first shank portion (12), **characterised in that** the first shank portion (12) comprises a radial passage opening (34) provided between the drive portion (16) and the second shank portion (14) or contains a cavity (36) provided between the drive portion (16) and the second shank portion (14).

2. A screw according to claim 1, **characterised in that** the first shank portion (12) takes the form of a cylinder (24) at least in a region (27) in which it encloses the second shank portion (14), said cylinder extending as far as over the threadless portion (18).

3. A screw according to claim 2, **characterised in that**, at its end remote from the drive portion (16), the cylinder (24) is stepped by means of at least one smaller diameter cylindrical portion (25).

4. A screw according to any one of the preceding claims, **characterised in that** the second shank portion (14) is made from a conventional commercial threaded rod.

5. A screw according to claim 4, **characterised in that**, on the part (15) with the further thread (21), the threaded rod inside the first shank portion (12) additionally comprises a flat head (26) and/or a groove-like circumferential recess (28).

6. A screw according to any one of claims 1 to 5, **characterised in that** the screw (10) is a machine screw.

7. A screw according to any one of claims 1 to 3, **characterised in that** the screw (10) is a self-drilling screw.

8. A screw according to any one of the preceding claims, **characterised in that** the threadless portion (18) between the thread (20) and the first shank portion (12) is provided with at least two cutting wings (30), the external diameter (D_{B}) of which corresponds to the external diameter (D_{Z}) of the first shank portion (12).

9. A screw according to any one of claims 1 to 7, **characterised in that** the first shank portion (12) is provided at its end remote from the drive portion (16) with at least one cutting bit (32) at its circumference.

10. A screw according to any one of the preceding claims, **characterised in that** the further thread (21) on the second shank portion (14) has a smaller or larger thread pitch than the other thread (20) on the second shank portion (14).

11. A screw according to any one of the preceding claims, **characterised in that** the cavity (36) is filled with an insulating material (38).

12. A screw according to any one of the preceding claims, **characterised in that** the first shank portion (12) consists of reinforced plastics.

13. A connector for fixing planar elements such as panes of glass to a roof or facade structure comprising mullions and transoms or the like, mullions and transoms each consisting of metal and comprising a basic profile, and at least one screw, which is in threaded engagement with the basic profile, fixing two planar elements to the basic profile by means of an outer retaining strip via contact seals, **characterised by** use of a screw having a first shank portion (12) of plastics, which is provided with a drive portion (16) moulded thereon or therein and which is interlockingly connected for rotation to a second shank portion (14) of metal, which in the direction away from the drive portion (16) comprises a threadless portion (18) and then a thread (20), the threadless portion (18) extending partially in the first shank portion (12) and partially outside said portion, the second shank portion (14) inside the first shank portion (12) being at an axial distance (A) from the drive portion (16), the second shank portion (14) comprising a part (15) with a further thread (21), said part (15) extending from the threadless portion (18) in the first shank portion (12) towards the drive portion (16) and forming the interlocking connection for rotation with the first shank portion (12), and the first shank portion (12) comprising a radial passage opening (34) provided between the drive portion (16) and the second shank portion (14) or containing a cavity (36) provided between the drive portion (16) and the second shank portion (14).

## Revendications

1. Vis comportant une première partie de tige (12) en matériau synthétique qui est équipée d'une partie d'entraînement (16) moulée ou rapportée sur celle-ci et est reliée par une liaison par la forme et de manière fixe en rotation avec une seconde partie de tige (14) en métal qui comporte, dans le sens opposé à la partie d'entraînement (16), une partie (18) exempte de filetage, puis un filetage (20) situé dans le prolongement de celle-ci, la partie (18) exempte de filetage s'étendant en partie dans la première partie de tige (12) et en partie en-dehors de celle-ci, et la seconde partie de tige (14) étant située, à l'intérieur de la première partie de tige (12) à une distance axiale (A) de la partie d'entraînement (16),
la seconde partie de tige (14) comportant une partie (15) ayant un autre filetage (21) s'étendant, à partir de la partie (18) exempte de filetage dans la première partie de tige (12) en direction de la partie d'entraînement (16), et formant la liaison par la forme et fixe en rotation avec la première partie de tige (12),
**caractérisée en ce que**
la première partie de tige (12) comporte une ouverture traversante radiale (34) réalisée entre la partie d'entraînement (16) et la seconde partie de tige (14) ou renferme une cavité (36) réalisée entre la partie d'entraînement (16) et la seconde partie de tige (14).

2. Vis conforme à la revendication 1,
**caractérisée en ce que**
la première partie de tige (12) est réalisée, au moins dans la zone (27) dans laquelle elle entoure la seconde partie de tige (14), sous la forme d'un cylindre (24) qui s'étend jusque sur la partie (18) exempte de filetage.

3. Vis conforme à la revendication 2,
**caractérisée en ce que**
le cylindre (24) est étagé, sur sa face opposée à la partie d'entraînement (16) par au moins une partie cylindrique (25) de plus petit diamètre.

4. Vis conforme à l'une des revendications précédentes,
**caractérisée en ce que**
la seconde partie de tige (14) est fabriquée à partir d'une tige filetée disponible dans le commerce.

5. Vis conforme à la revendication 4,
**caractérisée en ce que**
la tige filetée comporte, en outre à l'intérieur de la première partie de tige (12), sur la partie (15) équipée de l'autre filetage (21) une tête aplatie (26) et/ou un évidement périphérique (28) en forme de rainure.

6. Vis conforme à l'une des revendications 1 à 5,
**caractérisée en ce que**
la vis (10) est une vis d'assemblage.

7. Vis conforme à l'une des revendications 1 à 3,
**caractérisée en ce que**
la vis (10) est une vis perceuse.

8. Vis conforme à l'une des revendications précédentes,
**caractérisée en ce que**
la partie exempte de filetage (18) est équipée, entre le filetage (20) et la première partie de tige (12), d'au moins deux ailettes perforeuses (30) dont le diamètre externe (D_{B}) correspond au diamètre externe (Dz) de la première partie de tige (12).

9. Vis conforme à l'une des revendications 1 à 7,
**caractérisée en ce que**
la première partie de tige (12) est équipée, à sa périphérie, à son extrémité située à l'opposé de la partie d'entraînement (16), d'au moins une tranche perforeuse (32).

10. Vis conforme à l'une des revendications précédentes,
**caractérisée en ce que**
l'autre filetage (21) de la seconde partie de tige (14) a un pas supérieur ou inférieur à celui du filetage (20) de la seconde partie de tige (14).

11. Vis conforme à l'une des revendications précédentes,
**caractérisée en ce que**
la cavité (36) est remplie d'un matériau isolant (38).

12. Vis conforme à l'une des revendications précédentes,
**caractérisée en ce que**
la première partie de tige (12) est réalisée en un matériau synthétique renforcé.

13. Système de liaison permettant de fixer des éléments plats, tels que des vitres sur une construction de toit ou de façade comportant un poteau et une traverse ou similaire, le poteau et la traverse étant respectivement réalisés en métal et comportant un profil de base, et au moins une vis dont le filetage est en prise avec ce profil de base, fixant deux éléments plats au profil de base sur des garnitures d'étanchéité d'appui au moyen d'une barre de maintien externe,
**caractérisé par**
l'utilisation d'une vis comportant une première partie de tige (12) en matériau synthétique qui est équipée d'une partie d'entraînement (16) moulée ou rapportée sur celle-ci, et est reliée par une liaison par la forme et de façon fixe en rotation avec une seconde partie de tige (14) réalisée en métal qui comporte dans le sens opposé à la partie d'entraînement (16), une partie (18) exempte de filetage puis un filetage (20) situé dans le prolongement de celle-ci, la partie (18) exempte de filetage s'étendant en partie dans la première partie de tige (12) et en partie à l'extérieur de celle-ci, la seconde partie de tige (14) étant située, à l'intérieur de la première partie de tige (12), à une distance (A) de la partie d'entraînement (16), la seconde partie de tige (14) comportant une partie (15) ayant un autre filetage (21) s'étendant à partir de la partie (18) exempte de filetage dans la première partie de tige (12) en direction de la partie d'entraînement (16), et formant la liaison par la forme et fixe en rotation avec la première partie de tige (12), et la première partie de tige (12) comportant une ouverture traversante (34) radiale réalisée entre la partie d'entraînement (16) et la seconde partie de tige (14), ou renfermant une cavité (36) réalisée entre la partie d'entraînement (16) et la seconde partie de tige (14).
